# EUROPÄISCHE PATENTSCHRIFT

(11) **EP 3 454 253 B1**
(45) Veröffentlichungstag und Bekanntmachung des Hinweises auf die Patenterteilung: **06.08.2025**
(21) Anmeldenummer: 18191090.2
(22) Anmeldetag: 28.08.2018
(51) Int. Cl.: G06T 7/521, G06T 5/80, G06T 11/00, G06V 20/64, G06V 40/16

(54) **VORRICHTUNG UND VERFAHREN ZUR ERZEUGUNG EINES BRILLENGLASLOSEN ODER BRILLENLOSEN GESICHTSBILDS EINER BEBRILLTEN PERSON**
DEVICE AND METHOD FOR GENERATING A SPECTACLE GLASS-FREE OR SPECTACLE-FREE IMAGE OF THE FACE OF A BESPECTACLED PERSON
DISPOSITIF ET PROCÉDÉ DE PRODUCTION D'UNE IMAGE FACIALE SANS VERRE DE LUNETTE OU SANS LUNETTE D'UNE PERSONNE PORTANT DES LUNETTES

(30) Priorität: 28.08.2017 DE 102017119625
(43) Veröffentlichungstag der Anmeldung: 13.03.2019
(73) Patentinhaber: Bundesdruckerei GmbH, 10969 Berlin (DE)
(72) Erfinder: Wolf, Andreas, 13158 Berlin (DE)
(74) Vertreter: Hentrich Patent- & Rechtsanwaltspartnerschaft mbB

(56) Entgegenhaltungen:
- WO-A1-2016/111327
- CN-A- 102 253 590
- JP-A- 2008 232 776
- US-A1- 2002 136 435
- US-B1- 9 202 105
- FABIO MANINCHEDDA ET AL: "Fast 3D Reconstruction of Faces with Glasses", ARXIV - 1611.07004V2, 1 July 2017 (2017-07-01), pages 4608 - 4617, XP055549648, ISBN: 978-1-5386-0457-1, DOI: 10.1109/CVPR.2017.490
- PROESMANS M ET AL: "Active acquisition of 3D shape for moving objects", PROCEEDINGS OF THE INTERNATIONAL CONFERENCE ON IMAGE PROCESSING (ICIP) LAUSANNE, SEPT. 16 - 19, 19; [PROCEEDINGS OF THE INTERNATIONAL CONFERENCE ON IMAGE PROCESSING (ICIP)], NEW YORK, IEEE, US, vol. 3, 16 September 1996 (1996-09-16), pages 647 - 650, XP010202477, ISBN: 978-0-7803-3259-1, DOI: 10.1109/ICIP.1996.560578
- WONG W K ET AL: "Eyeglasses removal of thermal image based on visible information", INFORMATION FUSION, ELSEVIER, US, vol. 14, no. 2, 22 September 2011 (2011-09-22), pages 163 - 176, XP028975519, ISSN: 1566-2535, DOI: 10.1016/J.INFFUS.2011.09.002

## Beschreibung

Die Erfindung betrifft eine Vorrichtung zur Erzeugung eines brillenlosen, vorzugsweise biometrischen Gesichtsbildes einer bebrillten Person. Weiterhin betrifft die Erfindung ein Verfahren zur Erzeugung eines brillenlosen Gesichtsbilds der bebrillten Person.

Bilder, insbesondere Passbilder sollten eine möglichst eindeutige Identifizierung der abgebildeten Person ermöglichen. Das Tragen von Brillen kann eine solche Identifizierung erschweren, insbesondere wenn sie automatisiert erfolgt. Brillen, vor allem Brillen mit auffälligen Brillengestellen, können den Eindruck eines Gesichts verändern und auch biometrische Merkmale, wie beispielsweise der Augenabstand, können wegen der optischen Effekte der Brillengläser verzerrt bzw. verändert erscheinen. Somit beeinträchtigen Brillen die Leistung von biometrischen Gesichtserkennungssystemen. Eine Möglichkeit, die Identifizierung zu verbessern, liegt in der Aufforderung die Brille während der Erstellung des Gesichtsbildes bzw. Passbildes abzunehmen. Dies ist allerdings, insbesondere für stark fehlsichtige Menschen, nicht nur unangenehm sondern kann dazu führen, dass diese Menschen die Augen stark zukneifen, um Anweisungen an einem Terminal oder einem Bedienfeld lesen zu können. Dies wirkt einem gewünschten neutralen Blick der Person beim Identifizierungsvorgang oder beim Bilderstellungsvorgang entgegen.

Maninchedda et al., Proceedings of the IEEE Conference on Computer Vision and Pattern Recognition, Seiten 4608 - 4617, 21.07.-26.07.2017, Honolulu, Hawaii, USA offenbart ein Verfahren, welches mit einem Mobiltelefon durchführbar ist zur 3D Gesichtsrekonstruktion von Brillen tragenden Menschen. Dabei wird von einer mittels des Mobiltelefons erstellten Bilderserie zunächst ein Höhenprofil erstellt und das Vorhandensein einer Brille detektiert. Ist die Summe über alle Gradienten des Höhenprofils größer als ein vorgegebener Grenzwert, so spricht dies für die Existenz der Brille. Im nächsten Schritt wird die Brille vom Rest des Bildes segmentiert, unter der Annahme, dass die Brille sich vom Rest des Gesichts aufgrund der Farbe oder des Höhenprofils unterscheidet, die Brille symmetrisch ist, das Auge durch die Brille bedeckt ist und dass die Brille eine einheitliche Oberfläche bildet. Das 3D Gesicht wird im nächsten Schritt durch Optimierung der Ausrichtung, Model fitting und durch Optimierung des Höhenprofils mittels des Angleichens von Höhendifferenzen rekonstruiert.

Proesmans et al., Proceedings of the international Conference on Image Processing, Seiten 647 - 650, 16.09.-19.09.1996, Lausanne, Schweiz zeigt eine aus einer Kamera, einem Projektionsmittel und einem Detektor bestehende Vorrichtung, mittels der eine 3D Rekonstruktion eines Gesichts mittels strukturierter Beleuchtung möglich ist. Mittels der strukturierten Beleuchtung wird also ein 3D Modell erzeugt.

Die US 9 202 105 A offenbart ein Verfahren zur Gesichtserkennung und zur "presentation attack detection", beispielsweise anhand von vorgegebenen Orientierungspunkten in einem Bild. Die Vorrichtung ist dabei als ein Rechner/Mobiltelefon/Tablet mit einer oder mehreren Kameras gebildet.

Die US 2002/0136435 A1 offenbart ein System mit einer VIS- und einer IR-Kamera zur Gesichtserkennung, wobei die Bildinformation der VIS-Abbildung und von der IR-Abbildung für die Gesichtserkennung verwendet werden, um die Qualität der Gesichtserkennung zu verbessern.

Wong und Zhao, Information Fusion 14, Seiten 163 - 176, 2013 zeigt eine Vorrichtung und ein Verfahren zum Entfernen von Brillengläsern durch Kombination der Bildinformation von einem VIS-Bild mit der Bildinformation eines thermischen IR-Bilds.

Die JP 2008 232 776 A offenbart eine Vorrichtung und ein Verfahren zur Messung eines dreidimensionalen Bildes eines Objekts mit zwei Kameras und einem Projektionsmittel, welches eine Punktwolke erzeugt. Die Auswerteeinheit ist ausgebildet, anhand des mittels des Projektionsmittels beleuchteten Gesichts die durch Brillengläser hervorgerufenen optischen Effekte auszugleichen und erzeugt ein Distanzbild des Objektes.

Die WO 2016/111 327 offenbart einen Gesichtserkennungsapparat und ein Verfahren zur Gesichtserkennung für ein Auto. Die Vorrichtung umfasst dabei eine Infrarotkamera und zwei Projektionsmittel, die im Nahinfrarotbereich Licht emittieren und ein Streifenmuster auf das Gesicht einer Person mit Bereichen höherer Intensität und niedrigerer Intensität projizieren.

Die CN 10 225 359 0B zeigt ein Konturendetektionselement zur Verbesserung der Bildqualität von Kameras mit einer ersten Infrarotkamera und einer im sichtbaren Bereich detektierenden zweiten Kamera. Weiterhin sind zwei Projektionsmittel vorgesehen, die ein Gesicht oder ein Objekt mit einem vertikalen oder horizontalen Linienmuster beleuchten, um optische Effekte, insbesondere an den Konturen des Bildes zu entfernen.

Der Erfindung liegt daher die Aufgabe zugrunde, eine Vorrichtung und ein Verfahren zur Erzeugung eines Gesichtsbildes einer bebrillten Person bereitzustellen, durch die sich ein ein brillenloses, biometrisches Gesichtsbild erstellen lässt.

Die die Vorrichtung betreffende Aufgabe wird gelöst durch eine Vorrichtung mit dem Merkmalsbestand des Anspruchs 5 gelöst.

Diese Vorrichtung zur Erzeugung eines brillenlosen, biometrischen Gesichtsbildes einer bebrillten Person, umfasst eine Kamera zur Erfassung eines Gesichts der Person sowie eine mit der Kamera verbundene Auswerteeinheit. Außerdem ist ein Projektionsmittel zur Beleuchtung des Gesichts der Person, insbesondere zur Projektion eines Musters auf das Gesicht, vorgesehen. Die Auswerteeinheit ist ausgebildet, durch Brillengläser hervorgerufene optische Effekte mittels eines Verfahrens zur Erfassung dreidimensionaler Objekte auszugleichen und die Brille aus einer Abbildung mittels einer Bildbearbeitung zu entfernen.

Die Kamera dient der Erzeugung einer Abbildung der Person, wobei die Auswerteeinheit mit anderen Worten derart ausgestaltet ist, die Brille aus der Abbildung mittels einer Bildbearbeitung zu entfernen. Anhand des mit dem Projektionsmittel beleuchteten Gesichts, lässt sich ein Ausgleich der durch die Brillengläser hervorgerufenen optischen Effekte erzeugen. Diese optischen Effekte sind beispielsweise die Brechung am Glasrand des Brillenglases bzw. die Verzeichnung durch die Krümmung des Glases oder dergleichen. Hierauf sei an anderer Stelle nochmals eingegangen. Die Auswerteeinheit kann in Form eines Computers gestaltet sein und diverse Ein- und/oder Ausgabeeinheiten umfassen. Die Auswerteeinheit umfasst vorzugsweise einen eigenständigen Prozessor (bspw. einen Mikroprozessor) mit in dessen Speicher abgelegten und ausführbaren Echtzeitbetriebssystem (RTOS=real-time operating system) und ggfs. eine oder mehrere Anwendungen (Applications) zur Erzeugung eines brillenloses oder brillengestellloses Gesichtsbildes einer bebrillten Person.

Durch die erfindungsgemäße Vorrichtung wird somit nicht nur die Brille selbst mittels einer Bildbearbeitung entfernt, sondern es werden durch die Beleuchtung des Gesichts mittels des Projektionsmittels zusätzlich die optischen Effekte der Brillengläser kompensiert. Dadurch wird ein Gesichtsbild der Person erzeugt, so, als würde die Person gar keine Brille tragen. Die Vorrichtung kann dabei sowohl dem Erstellen eines Identifizierungsbildes, d.h. eines Gesichtsbildes zur Verwendung in einem Pass, als auch der Erzeugung eines Identifizierungsbildes zum Abgleich mit einem Passbild zum Beispiel an einem ABC-System (engl. "automated boarder control") dienen.

Erfindungsgemäß ist dabei das Projektionsmittel ausgebildet, das Gesicht der Person mittels einer strukturierten Beleuchtung zu bestrahlen. Hierbei ist das Verfahren zur Erfassung dreidimensionaler Objekte auch als Streifenprojektionsverfahren bekannt.

Vorzugsweise emittiert das Projektionsmittel Licht im sichtbaren Wellenlängenbereich von wenigstens näherungsweise 400 Nanometern (nm) bis wenigstens näherungsweise 780 Nanometern. Alternativ oder ergänzend ist das Projektionsmittel ausgestaltet, Licht im nicht sichtbaren Wellenlängenbereich, d.h. unterhalb von wenigstens näherungsweise 400 Nanometern oder oberhalb von wenigstens näherungsweise 780 Nanometern zu emittieren. Eine solche Ausgestaltung des Projektionsmittels verbessert die Detektionsmöglichkeiten der, vorzugsweise strukturierten, Beleuchtung bzw. ermöglicht eine bessere Trennbarkeit der Aufnahmen durch die Kamera und der Detektion der, vorzugsweise strukturierten, Beleuchtung. Außerdem ist der Komfort für die Person erhöht, denn in einem solchen Falle bleibt ein verwendetes Streifen- oder Gittermuster im Gesicht der Person für diese unsichtbar. In diesem Zusammenhang ist es insbesondere bevorzugt, wenn das Projektionsmittel Licht im nahen Infrarot ("NIR")-Wellenlängenbereich emittiert, d.h. zwischen wenigstens näherungsweise 780 Nanometern bis wenigstens näherungsweise 3 Mikrometern (µm).

Im Rahmen der vorliegenden Erfindung ist vorzugsweise eine Nahinfrarotkamera ("NIR-Kamera") zur Detektion der durch das Projektionsmittel erzeugten, vorzugsweise strukturierten, Beleuchtung vorgesehen. Die NIR-Kamera ist vorzugsweise so ausgestaltet, denselben Gesichtsbereich abzubilden, wie es die Kamera tut. Dadurch lassen sich die Abbildung der NIR-Kamera und die Abbildung der Kamera auf einfache Weise zueinander in Beziehung setzen.

Vorzugsweise sind die Kamera und die NIR-Kamera auf einen Strahlteiler gerichtet, der das einfallende Licht im NIR-Wellenlängenbereich möglichst weitgehend transmittiert und das einfallende Licht im sichtbaren Wellenlängenbereich möglichst weitgehend reflektiert. Durch den Einsatz eines Strahlteilers lässt sich die Vorrichtung kompakt halten.

In einer alternativen Ausführungsform ist es vorgesehen, dass das Projektionsmittel selbst eine NIR-Kamera umfasst. In einem solchen Fall umfasst das Projektionsmittel also einen NIR-Emitter zur, vorzugsweise strukturierten, Beleuchtung des Gesichts der Person und einen NIR-Detektor zur Detektion der im Gesicht der Person reflektierten NIR-Struktur.

Zur Aufnahme eines biometrischen Gesichtsbildes ist es von Vorteil, dass mittels der Kamera Wellenlängen im sichtbaren Bereich detektierbar sind. Der sichtbare Wellenlängenbereich erstreckt sich dabei von ungefähr 400 Nanometern bis ungefähr 780 Nanometern.

Eine alternative Ausführungsform sieht aber vor, dass die Kamera ausgestaltet ist, Licht sowohl im nahen Infrarot ("NIR") als auch im sichtbaren Bereich ("VIS") erfassen zu können. Dieser als NIR-VIS-Kamera ausgebildeten Kamera sind dann zwei wechselbare Sperrfilter zugeordnet, welche in oder aus einem Strahlengang zwischen dem Gesicht der Person und der NIR-VIS-Kamera verstellbar sind. Das erste Sperrfilter weist einen Durchlassbereich für Wellenlängen des Lichts im NIR auf und das zweite Sperrfilter weist einen Durchlassbereich für Wellenlängen des sichtbaren Lichts auf. Hierdurch können mittels einer einzigen Kamera sowohl die, vorzugsweise strukturierte, Beleuchtung als auch das Gesichtsbild erfasst werden. Dadurch ist ein kompakter Aufbau mit nur wenigen Bauteilen realisiert. Durch die in den Strahlengang verstellbaren Sperrfilter lässt sich die, vorzugsweise strukturierte, Beleuchtung im NIR-Wellenlängenbereich getrennt von dem Gesichtsbild im sichtbaren Wellenlängenbereich detektieren.

Zur Auflösungsverbesserung - und damit zur Erhöhung der Bildqualität eines Gesichtsbildes - ist es ferner vorteilhaft, wenn mindestens eine weitere Kamera zur Aufnahme mindestens eines weiteren Gesichtsbildes vorgesehen ist. Durch den Einsatz der weiteren Kamera ist es nun möglich, etwaig fehlende Bildinformationen zu ergänzen, die beim Entfernen des Brillengestells und/oder bei der Kompensation der optischen Effekte der Brillengläser entstanden sind. Durch die zusätzliche Kamera werden mit anderen Worten also zusätzliche Bildinformationen des Gesichts gesammelt.

In diesem Zusammenhang ist es insbesondere vorteilhaft, dass die weitere Kamera der Vorrichtung im Vergleich zur Kamera unter einem anderen Neigungswinkel angeordnet ist. Somit sind zwei unterschiedliche Blickwinkel auf das Gesicht der Person realisiert.

Eine alternative Ausführungsform sieht vor, dass das Projektionsmittel ausgestaltet ist, das Gesicht der Person unter einem Neigungswinkel bezüglich der Horizontalen, vorzugsweise strukturiert, zu beleuchten. Dabei ist es insbesondere vorgesehen, dass das Projektionsmittel so angeordnet ist, dass die Beleuchtung von schräg oben oder von schräg unten bezüglich der Horizontalen bzw. bezüglich des Gesichts erfolgt. In einer vorteilhaften Ausgestaltung ist das Projektionsmittel als ein Beamer gebildet.

Es hat sich als vorteilhaft erwiesen, wenn das Projektionsmittel ausgestaltet ist, eine Linienstruktur auf das Gesicht der Person zu projizieren. Zur besseren Detektion und Kompensation der durch die Brillengläser hervorgerufenen optischen Effekte ist es außerdem von Vorteil, wenn ein zweites Projektionsmittel zur Erzeugung einer, vorzugsweise strukturierten, Beleuchtung, vorzugsweise in Form einer zweiten Linienstruktur, vorgesehen ist, so dass gemeinsam mit dem ersten Projektionsmittel ein Gittermuster auf dem Gesicht der Person erzeugt werden kann. Durch den Einsatz eines Gittermusters lassen sich die optischen Effekte engmaschiger detektieren. In einer weiteren alternativen Ausgestaltung ist es auch möglich, dass mittels eines einzigen Projektionsmittels direkt ein Gittermuster auf das Gesicht projizierbar ist. Die Beleuchtung kann in einer bevorzugten Ausführungsform ein unter dem Neigungswinkel abgestrahltes Linienmuster oder ein unter dem Neigungswinkel abgestrahltes Gittermuster auf dem Gesicht der Person bilden.

Die das Verfahren betreffende Aufgabe wird mit einem Verfahren gemäß dem Merkmalsbestand des Anspruchs 1 gelöst.

Das Verfahren zur Erzeugung eines brillenlosen, biometrischen Gesichtsbildes einer bebrillten Person, umfasst die folgenden Schritte:
A) Aufnahme einer ersten Abbildung eines Gesichts der Person mittels einer Kamera;
B) Ermittlung von den den Brillengläsern zugeordneten Pixeln in der ersten Abbildung mittels einer Auswerteeinheit;
C) Beleuchten, vorzugsweise strukturiertes Beleuchten des Gesichts der Person und dadurch Erzeugen eines Musters auf dem Gesicht und auf den Brillengläsern mittels eines Projektionsmittels, vorzugsweise mittels eines Projektionsmittels zur strukturierten Beleuchtung;
D) Aufnahme einer zweiten Abbildung des, vorzugsweise strukturiert beleuchteten Gesichts der Person, vorzugsweise mittels der Kamera oder mittels einer zweiten Kamera; und
E) Ermittlung und Ausgleich von durch die Brillengläser hervorgerufenen optischen Effekten innerhalb der ersten Abbildung anhand einer in der zweiten Abbildung detektierten Musterverzeichnung mittels der Auswerteeinheit, um das brillenlose Gesichtsbild der Person zu erzeugen.

Mit diesem Verfahren wird es einer Person ermöglicht, die Brille auch während des Aufnahmeprozesses zu tragen. Dennoch wird ein nahezu eindeutiges Gesichtsbild erzeugt, welches eine verbesserte - ggfs. automatische - Identifizierung der Person erlaubt. Dabei wird die Brille der Person nachträglich entfernt und die durch sie hervorgerufenen optischen Effekte - weitestgehend - beseitigt.

Es ist bei der Erstellung von Portraits für maschinenlesbare Reisedokumente (MRTD=Machine Readable Travel Documents) empfohlen, dass im Bild näherungsweise 120 Information tragende Pixel im interokularen Abstand enthalten sind, damit Strukturen, die einen Millimeter (mm) groß sind, im Bild erkennbar bleiben. Demgegenüber setzen sowohl die Vorrichtung als auch das Verfahren vorzugsweise eine erhöhte Auflösung ein. Der interokulare Abstand umfasst beispielsweise mehr als 360 Pixel, welche die Bildinformationen tragen. Dabei entstehen Portraitbilder mit einer Gesamtbildbreite von mehr als 1.800 Pixeln. Diese Werte sind Richtwerte, so dass Abweichungen, auch nach unten erlaubt sind, so lange sie nicht übermäßig groß sind. Eine Abweichung nach unten um maximal 10 Prozent erscheint möglich. Die Abbildungen werden außerdem vorzugsweise aus einem Videostream extrahiert. Dies alles gewährleistet, dass ein ausreichend gutes Datenmaterial für die Durchführung des erfindungsgemäßen Verfahrens, insbesondere für den Ausgleich der Musterverzeichnung vorhanden ist. Die größere Datenmenge erlaubt einen schnelleren Ausgleich der durch die Brillengläser hervorgerufenen Effekte und Verrechnungen und Entzerrungen lassen sich einfacher eliminieren.

Die Ermittlung der den Brillengläsern zugeordneten Pixeln bzw. der der Brille zugeordneten Pixeln erfolgt dabei beispielsweise durch eine Randerkennung, durch eine Kontrasterkennung oder durch eine Farberkennung.

Wenn die Kamera als NIR-VIS-Kamera gebildet ist, kann sowohl die Aufnahme der ersten Abbildung als auch die Aufnahme der zweiten Abbildung mit der NIR-VIS-Kamera erfolgen. Ist die Kamera lediglich als im sichtbaren Wellenlängenbereich operierende VIS-Kamera gebildet, so kann die Aufnahme der zweiten Abbildung mit einer zweiten Kamera, insbesondere mit einer NIR-Kamera erfolgen.

Die durch die Brillengläser hervorgerufenen optischen Effekte umfassen dabei Abbildungsfehler, die Brechung des Lichts am Rand der Brillengläser, sowie die Abbildungseffekte, die durch konvexe und/oder konkave Linsenformen hervorgerufen werden, im allgemeinen spricht man hier von einer sogenannten "Verzeichnung".

Erfindungsgemäß ist vorgesehen, dass die Musterverzeichnung detektiert wird durch eine Ermittlung von Unstetigkeitsstellen des Musters in der zweiten Abbildung mittels der Auswerteeinheit. Diese Unstetigkeitsstellen des Musters entstehen durch die Brechung des Lichts am Rand der Brillengläser. Durch diese Ermittlung der Unstetigkeitsstellen innerhalb der zweiten Abbildung lässt sich eine erste Korrektur der optischen Effekte bzw. Verzeichnung in der ersten Abbildung vornehmen. Alternativ oder ergänzend kann die Musterverzeichnung detektiert werden durch eine Ermittlung von Knickstellen im Muster. An diesen Stellen weist der Musterverlauf also einen Knick auf, der auf eine andere Brechung des Lichts am Rand des Brillenglases schließen lässt. An diesen Stellen lässt sich keine eindeutige Tangente an den Linienverlauf anlegen, weshalb hier von einer Unstetigkeit in der ersten Ableitung einer dem Linienverlauf entsprechenden Funktion gesprochen werden kann.

Um außerdem das Brillengestell aus dem Gesichtsbild der ersten Abbildung zu entfernen, hat es sich als vorteilhaft erwiesen, wenn vorzugsweise zumindest dem Schritt A) der folgende Schritt folgt:
- Ermittlung von Gestellpixeln in der ersten Abbildung, die einem Brillengestell der Brille zugeordnet sind, mittels der Auswerteeinheit, und Substituieren der Gestellpixel zur Erzeugung eines brillenlosen Gesichtsbildes.

Die Substitution der Gestellpixel kann dabei entweder durch Extrapolation der zu den Gestellpixeln benachbarten Pixeln erfolgen. Dies stellt eine einfache und bei vergleichsweise dünnen Brillengestellen ausreichende Substitutionsmöglichkeit dar. Bevorzugt ist es allerdings, wenn die Substitution der Gestellpixel über eine zusätzliche Aufnahme ggfs. unter Zuhilfenahme einer weiteren Kamera erfolgt. Die Zusätzliche Aufnahme kann dann fehlende Bildinformationen ergänzen, die beim Entfernen des Brillengestells und/oder bei der Kompensation der optischen Effekte der Brillengläser entstanden sind.

Aus dem gleichen Grunde ist es im Rahmen einer alternativen Ausgestaltung auch sinnvoll, die nach dem Ausgleich der Musterverzeichnung fehlenden Bildinformationen zu ergänzen, die insbesondere bei Verwendung von konvexen Linsen am Rand der Brillengläser entsteht. Hierbei ist insbesondere vorgesehen, dass das Verfahren noch zusätzlich die folgenden Schritte umfasst:
- Überprüfen des Gesichtsbilds auf fehlende Bildinformationen;
- Ermittlung der den fehlenden Bildinformationen entsprechenden Falschpixeln; und
- Substituieren der Falschpixel zur Erzeugung eines brillenglaslosen Gesichtsbilds.

Die Falschpixel sind folglich definiert als diejenigen Pixel, die als fehlende Bildinformation entstehen nach der Kompensation der durch die Brillengläser bzw. Krümmung der Linsen auftretenden optischen Effekte. Die Substitution der Falschpixel kann dabei in einer einfacheren Ausführungsform wieder durch Extrapolation der den Falschpixeln benachbarten Pixeln erfolgen.

Für die Substitution von Falschpixeln bei dicken Linsen, insbesondere bei konvexen Linsen und/oder dicken Brillengestellen, hat es sich allerdings auch als sinnvoll erwiesen, wenn das Verfahren die folgenden Schritte umfasst:
- Aufnehmen einer weiteren Abbildung des Gesichts der Person unter einem von der ersten Abbildung abweichenden Winkel;
- Ermittlung von den den Gestellpixeln und/oder den Falschpixeln entsprechenden Ersatzpixeln innerhalb der weiteren Abbildung, und
- Substituieren der Gestellpixel und/oder der Falschpixel.

Dadurch können die vom Brillengestell verdeckten Bereiche des Gesichts ergänzt werden und/oder die bei der Kompensation der Musterverzeichnung entstandenen fehlenden Bildinformationen ersetzt werden. Die Aufnahme der weiteren Abbildung kann dabei in einer Ausführungsform durch die Kamera erfolgen. Es hat es sich in diesem Zusammenhang als vorteilhaft erwiesen, wenn der Person bei der Aufnahme der Abbildung Anweisungen erteilt werden, den Kopf in unterschiedliche Richtungen zu neigen.

In einer alternativen Ausgestaltung wird die weitere Abbildung durch eine weitere Kamera erzeugt, unter einem gegenüber durch die Kamera der ersten Abbildung abweichenden Neigungswinkel.

Um die Kompensation der durch die Brillengläser hervorgerufenen optischen Effekte zu vereinfachen, ist erfindungsgemäß vorgesehen, dass das mindestens eine Projektionsmittel ein Streifenmuster auf das Gesicht der Person projiziert.

In einer anderen Ausführungsform der Erfindung ist die Auswerteeinheit ausgelegt, eine Qualitätskontrolle durchzuführen, durch Prüfung einer Auflösung bzw. einer Bildinformation des Gesichtsbildes. Hierzu sind in einer in einem Speicher abgelegten Datenbank der Auswerteeinheit eine oder mehrere Anforderungen an ein Identifizierungsbild hinterlegt. Genügt das Gesichtsbild einer oder mehreren Anforderungen nicht, so wird es verworfen und das Verfahren zur Erzeugung eines brillenglaslosen oder brillenlosen Gesichtsbildes der bebrillten Person beginnt erneut.

Im Rahmen der Qualitätskontrolle kann außerdem überprüft werden, ob noch weitere Falschpixel oder Gestellpixel in Form von Defektpixeln vorhanden sind, und ob diese zu substituieren sind. Falls dann zusätzliche Bildinformation benötigt werden, so können eine oder mehrere zusätzliche Abbildungen des Gesichts der Person unter einem gegenüber der ersten und auch gegenüber der weiteren Abbildung abweichenden Winkel aufgenommen werden. Diese Schritte werden so lange wiederholt bis ein Gesichtsbild erzeugt wurde, welches den hinterlegten Anforderungen an ein Identifizierungsbild hinsichtlich Lage, Auflösung usw. gerecht wird.

Die Kompensation der optischen Effekte kann darüber hinaus noch vereinfacht werden, indem in der Datenbank der Auswerteeinheit häufig verwendete Brillengläser oder Brillengestelle als Modell mit den dazu korrespondierenden Kompensationsdaten hinterlegt werden. In diesem Zusammenhang ist es also vorteilhaft, wenn, vorzugsweise zumindest nach Schritt A), die folgenden zusätzlichen Schritte vorgesehen sind:
- Ermittlung der Form des Brillenglases und Vergleich mit in einer Datenbank der Auswerteeinheit hinterlegten Kompensationsdaten, die korrespondierend zu vorgebbaren Brillenmodellen oder vorgebbaren Glasmodellen sind.
- Ausgleich der durch die Brille hervorgerufenen optischen Effekte mittels der korrespondierenden Kompensationsdaten.

Im Folgenden wird die Erfindung an in der Zeichnung dargestellten Ausführungsbeispielen näher erläutert; es zeigen:
- Fig. 1: eine Vorrichtung zur Erzeugung eines brillenlosen Gesichtsbilds einer bebrillten Person anhand einer schematischen Seitenansicht;
- Fig. 2: eine zweite Vorrichtung zur Erzeugung eines brillenlosen Gesichtsbilds einer bebrillten Person mit einer weiteren Kamera anhand einer schematischen Seitenansicht;
- Fig. 3: eine dritte Vorrichtung zur Erzeugung eines brillenlosen Gesichtsbilds einer bebrillten Person mit zwei Projektionsmitteln anhand einer schematischen Seitenansicht;
- Fig. 4: eine vierte Vorrichtung zur Erzeugung eines brillenlosen Gesichtsbilds einer bebrillten Person mit einer NIR-Kamera anhand einer schematischen Seitenansicht; und
- Fig. 5: eine schematische Darstellung der Projektion der strukturierten Beleuchtung auf das Gesicht und auf die Brillengläser der Person.

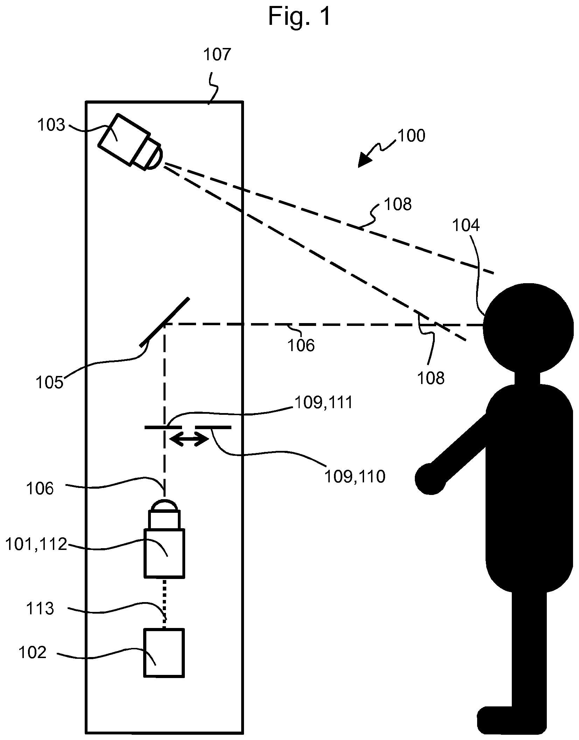

Figur 1 zeigt eine Vorrichtung 100 zur Erzeugung eines brillenlosen, biometrischen Gesichtsbildes einer bebrillten Person, mit einer Kamera 101 zur Erfassung eines Gesichts 104 der Person und mit einer mit der Kamera 101 über eine Kommunikationsverbindung 113 verbundenen Auswerteeinheit 102. Die Auswerteeinheit 102 ist ausgebildet, die durch Brillengläser 114 hervorgerufenen optischen Effekte mittels eines Verfahrens zur Erfassung von dreidimensionalen Objekten auszugleichen. Außerdem ist ein Projektionsmittel 103 zur Beleuchtung des Gesichts 104 der Person, insbesondere zur Projektion eines Musters auf dem Gesicht 104 vorgesehen. Die gezeigte Vorrichtung 100 macht sich ein Streifenprojektionsverfahren zu Nutze, so dass das Projektionsmittel 103 ausgestaltet ist, das Gesicht 104 der Person mittels einer strukturierten Beleuchtung 108 (auch "strukturiertes Licht" oder "coded light" genannt) zu bestrahlen.

In der der Person zugewandten Gehäusefront der Vorrichtung 100 sind Öffnungen ausgebildet, durch die der Strahlengang 106 zwischen der Kamera 101 und dem Gesicht 104 sowie die strukturierte Beleuchtung 108 hindurchtreten können. Die Kamera 101 ist im gezeigten Beispiel auf einen Spiegel 105 gerichtet, so dass der Strahlengang 106 der Kamera 101 gefaltet ist, um einen größeren Abstand zwischen der Kamera 101 und dem Gesicht 104 herzustellen. Das Projektionsmittel 103 erzeugt eine strukturierte Beleuchtung 108 in Form eines Streifenmusters 115, wobei durch das Projektionsmittel 103 das Gesicht 104 der Person unter einem Neigungswinkel bezüglich der Horizontalen strukturiert beleuchtet wird.

In der ersten Ausführungsform erfolgt die strukturierte Beleuchtung 108 des Gesichts 104, indem das Projektionsmittel 103 geneigt im Gehäuse 107 angebracht ist und auf das Gesicht 104 der Person gerichtet ist. Das Projektionsmittel 103 erzeugt dabei eine strukturierte Beleuchtung 108 im nicht sichtbaren Wellenlängenbereich, nämlich im NIR-Wellenlängenbereich. Die Kamera 101 ist deshalb als NIR-VIS-Kamera 112 ausgebildet, so dass die Kamera 112 sowohl im NIR-Wellenlängenbereich als auch im sichtbaren Wellenlängenbereich Licht detektieren kann.

Um eine Abbildung im sichtbaren Wellenlängenbereich des Gesichts 104 und eine Abbildung im NIR-Wellenlängenbereich der strukturierten Beleuchtung 108 aufnehmen zu können, sind der Kamera 112 darüber hinaus zwei wechselbare Sperrfilter 109 zugeordnet, die in und aus dem zwischen der Kamera 112 und dem Gesicht 104 verlaufenden Strahlengang 106 verstellbar sind. Die Verstellbarkeit ist durch den Doppelpfeil angedeutet. Dabei weist das erste Sperrfilter 110 einen Durchlassbereich auf, welcher größtenteils Licht im NIR-Wellenlängenbereich durchlässt, d.h. es sperrt Wellenlängen außerhalb des NIR-Wellenlängenbereichs, so dass zumindest sichtbares Licht blockiert ist. Das zweite Sperrfilter 111 weist einen Durchlassbereich auf, welcher größtenteils Licht im sichtbaren Wellenlängenbereich durchlässt, so dass Licht im NIR-Wellenlängenbereich zumindest nahezu vollständig gesperrt ist oder absorbiert wird.

Das Verfahren zur Erzeugung eines brillenglaslosen oder brillenlosen, vorzugsweise biometrischen Gesichtsbildes umfasst dabei die folgenden Schritte: Zunächst wird eine erste Abbildung eines Gesichts 104 der Person mittels der
Kamera 101, vorliegend der NIR-VIS-Kamera 112, aufgenommen. Diese erste Abbildung wird aufgenommen, während sich das zweite Sperrfilter 111 im Strahlengang 106 der NIR-VIS-Kamera 112 befindet, sodass lediglich Wellenlängen im sichtbaren Wellenlängenbereich transmittiert werden und von der NIR-VIS-Kamera 112 detektiert werden.

Die mit der NIR-VIS-Kamera 112 über eine Kommunikationsverbindung 113 in Kommunikation stehende Auswerteeinheit 102 ermittelt in einem nächsten Schritt die den Brillengläsern 114 zugeordneten Pixel in der ersten Abbildung. Dies kann beispielsweise über eine Randerkennung, eine Kontrasterkennung, eine Farberkennung oder auch über den Anstieg der Transmission von UV-Licht im UVA-Wellenlängenbereich durch die Brillengläser 114 (Anstieg der Transmission im Wellenlängenbereich von 380 Nanometern im Vergleich zur Transmission bei 320 Nanometer) erfolgen.

Außerdem wird durch das Projektionsmittel 103 das Gesicht 104 der Person strukturiert beleuchtet, wodurch ein Muster in Form eines Streifenmusters 115, auf das Gesicht 104 und auf die Brillengläser 114 projiziert wird. Dann wird eine zweite Abbildung des strukturiert beleuchteten Gesichts 104 der Person mittels der NIR-VIS-Kamera 112 aufgenommen, wobei nun das erste Sperrfilter 110 im Strahlengang 106 angeordnet ist, so dass größtenteils Licht im NIR-Wellenlängenbereich transmittiert wird.

Schließlich ermittelt die Auswerteeinheit 102 die durch die Brillengläser 114 hervorgerufenen optischen Effekte innerhalb der ersten Abbildung und gleicht sie anhand einer in der zweiten Abbildung detektierten Musterverzeichnung aus. Die Musterverzeichnung entsteht dabei zum einen durch die Brechung des Lichts an den Brillengläsern 114 aber auch durch die Krümmung der Brillengläser 114. Ziel des Ausgleichs der Musterverzeichnung ist es, in der ersten Abbildung ein Bild zu erzeugen, wie es einem Gesichtsbild ohne eine Brille entsprechen würde.

Bei konkaven Brillengläsern 114 erscheint die Augenregion kleiner als in der Realität, während sie bei konvexen Linsen größer erscheint. Der Ausgleich von den durch die Brillengläser 114 und/oder durch die Brille hervorgerufenen optischen Effekten erfolgt dabei in mehreren Schritten.

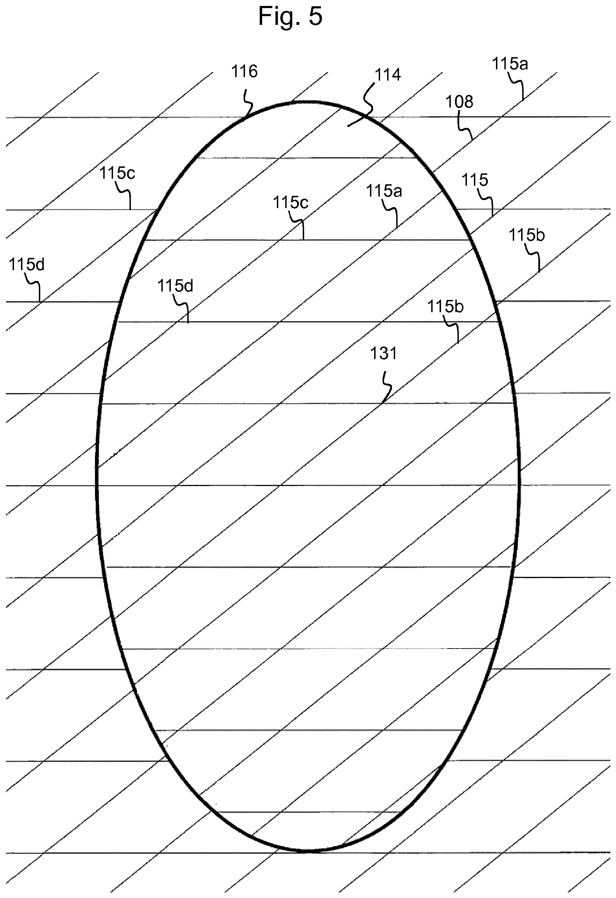

Wie in Figur 5 schematisch gezeigt ist, verschiebt sich die strukturierte Beleuchtung 108 aufgrund der Brechung des Lichts am Rand 116 der Brillengläser 114. Dadurch entstehen am Rand 116 der Brillengläser 114 Unstetigkeitsstellen und/oder Knickstellen im Linienverlauf des Musters. Dies lässt sich nachvollziehen, wenn man dem Verlauf der Linien 115a, 115b, 115c, 115d folgt. Darüber hinaus wird sich das Muster der strukturierten Beleuchtung 108 aufgrund der Krümmung der Linse kissenartig oder tonnenartig ausbreiten, so dass diese Verlaufsänderung des Musters zunächst in der zweiten Abbildung erfasst und dann anhand dieser Daten in der ersten Abbildung ausgeglichen wird.

Darüber hinaus wird zu Beginn ermittelt, ob es sich bei der Brille um eine randlose Brille handelt oder ob die Brille ein Brillengestell aufweist. Dies kann beispielsweise über einen Kontrastverlauf oder eine Farberkennung erfolgen. Ist ein Brillengestell vorhanden, so werden mittels der Auswerteeinheit 102 die Gestellpixel in der ersten Abbildung ermittelt, die dem Brillengestell der Brille zugeordnet sind. Darüber hinaus werden diese substituiert, d.h. entfernt und durch andere Pixel ersetzt, um nicht nur ein brillenglasloses, sondern auch ein brillengestelloses Gesichtsbild zu erzeugen. Die Substitution des Brillengestells bzw. der Gestellpixel kann dabei bei sehr dünnen und unauffälligen Brillengestellen durch Extrapolation der zu den Gestellpixeln benachbarten Pixel erfolgen.

Für eine genauere und qualitativ bessere Substitution ist es allerdings notwendig, zusätzliche Bildinformationen heranzuziehen. Diese werden beispielsweise erzeugt, indem die NIR-VIS-Kamera 112 unter Einsatzes des zweiten Sperrfilters 111 mindestens eine weitere Abbildung im sichtbaren Wellenlängenbereich aufnimmt, wobei die Person zusätzlich eine Anweisung erhält, den Kopf in eine von der ersten Abbildung abweichenden Position zu bewegen oder zu neigen. Die Auswerteeinheit 102 ermittelt dabei innerhalb der weiteren Abbildung die den Gestellpixeln entsprechenden Ersatzpixeln und substituiert die Gestellpixel durch die Ersatzpixel zur Ergänzung der vom Brillengestell verdeckten Bereiche des Gesichts 104.

Darüber hinaus kann die Auswerteeinheit 102 eine Qualitätskontrolle durchführen, d.h. sie ermittelt, ob alle Gestellpixel ersetzt wurden. Wenn noch fehlende Bildinformationen vorhanden sind, so werden diese - wenn möglich - durch die weitere Abbildung kompensiert oder es werden solange zusätzliche Abbildungen des Gesichts 104 der Person unter unterschiedlichen Neigungswinkeln des Gesichts 104 aufgenommen, bis die Qualitätskontrolle feststellt, dass das Gesichtsbild den in der Auswerteeinheit 102 hinterlegten Qualitätsansprüchen, d.h. Qualitätsparametern in Bezug auf die Auflösung und die Bildinformation etc. entspricht.

Alternativ, wenn festgestellt wurde, dass die Brille kein Brillengestell aufweist oder ergänzend, wenn ein Brillengestell detektiert wurde, wird das Gesichtsbilds auf fehlende Bildinformationen überprüft. Diese der fehlenden Bildinformation entsprechenden Falschpixel werden ermittelt und wiederum substituiert. Bei lediglich dünnen und/oder konkaven Linsen kann eine Substitution durch Extrapolation der zu den Falschpixeln benachbarten Pixel ausreichen. Alternativ oder ergänzend kann die Substitution auch durch die Bildinformation aus der weiteren oder den zusätzlichen Abbildungen erfolgen. Die den Falschpixeln entsprechenden Ersatzpixel in der weiteren oder in den zusätzlichen Abbildungen werden ermittelt, wobei die Falschpixel durch Ersatzpixel ersetzt werden. Auch hier erfolgt vorzugsweise eine Qualitätskontrolle, ob die fehlende Bildinformation ersetzt wurde und ob die hinterlegten Qualitätsanforderungen in Bezug auf Auflösung und Bildinformation erfüllt werden. Diese kann analog zu der in Bezug auf das Brillengestell beschriebenen Qualitätskontrolle erfolgen.

Die Vorrichtung 100 und das Verfahren können auch angewendet werden zur Aufnahme eines biometrischen Gesichtsbildes einer Person, die keine Brille trägt. In diesem Fall wird die Auswerteinheit 102 ermitteln, dass keine Brille vorhanden ist, so dass keine strukturierte Beleuchtung 108 des Gesichts erfolgt. Die erste Abbildung wird dann mittels der Auswerteeinheit 102 einer Qualitätskontrolle unterzogen und bei Bedarf weitere bzw. zusätzliche Abbildungen durch die Kamera 101 oder eine weitere Kamera 120 aufgenommen.

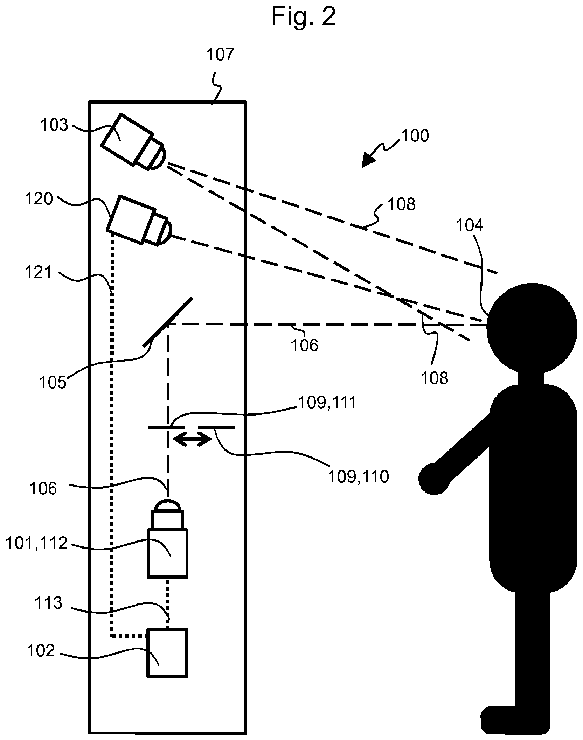

In Figur 2 ist eine zweite alternative Ausführungsform der erfindungsgemäßen Vorrichtung 100 gezeigt. Sie unterscheidet sich von der ersten Ausführungsform dadurch, dass eine weitere Kamera 120 vorgesehen ist zur Aufnahme mindestens eines weiteren Gesichtsbildes. Die weitere Kamera 120 ist unter einem gegenüber der Kamera 101 abweichenden Neigungs- bzw. Aufnahmewinkel bezüglich des Gesichts 104 der Person ausgerichtet. Die weitere Kamera 120 dient der Erzeugung von zusätzlicher Bildinformation zum Ausgleich der Gestell- und/oder Falschpixel. Sie ist deshalb ebenfalls über eine Kommunikationsverbindung 121 mit der Auswerteeinheit 102 verbunden. Das Verfahren ändert sich bei dieser Ausführungsform dahingehend, dass die weitere Abbildung nicht von der Kamera 101 sondern durch die weitere Kamera 120 aufgenommen wird.

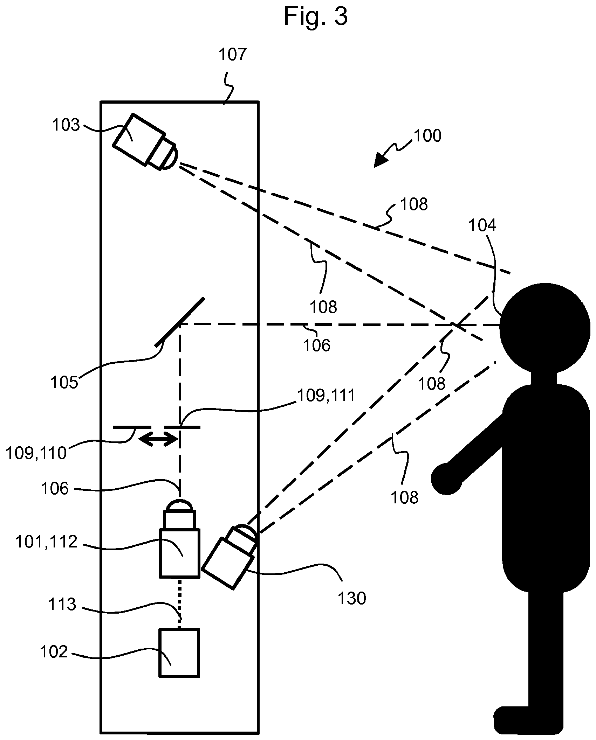

In Figur 3 ist eine dritte alternative Ausführungsform der erfindungsgemäßen Vorrichtung 100 gezeigt. Im Unterschied zur zweiten Ausführungsform weist sie ein zweites Projektionsmittel 130 auf, wobei die beiden Projektionsmittel 103, 130 so angeordnet sind, dass ein Gittermuster 131 auf dem Gesicht 104 der Person mittels strukturierter Beleuchtung 108 erzeugt wird. Die Projektionsmittel 103, 130 sind dabei derart angeordnet, dass sie das Gesicht 104 der Person von schräg oben und von schräg unten beleuchten. Durch die Erzeugung eines Gittermusters 131 können die optische Verzeichnung engmaschiger und dadurch genauer detektiert und damit besser ausgeglichen werden. Ein so erzeugtes Gittermuster 131 ist beispielsweise schematisch in Figur 5 zu erkennen, wobei jedes der Projektionsmittel 103, 130 ein eigenes Streifenmuster 115 projiziert. In einer alternativen Ausführung ist es auch möglich, dass nur ein einziges der Projektionsmittel 103, 130 das vollständige Gittermuster 131 erzeugt. In einer weiteren, nicht gezeigten Ausführungsform kann diese Vorrichtung 100 der dritten Ausführungsform noch eine im sichtbaren Wellenlängenbereich sensitive weitere Kamera 120 - wie zur zweiten Ausführungsform beschrieben - zur Aufnahme mindestens einer weiteren Abbildung und damit zum Sammeln weiterer Bildinformationen umfassen.

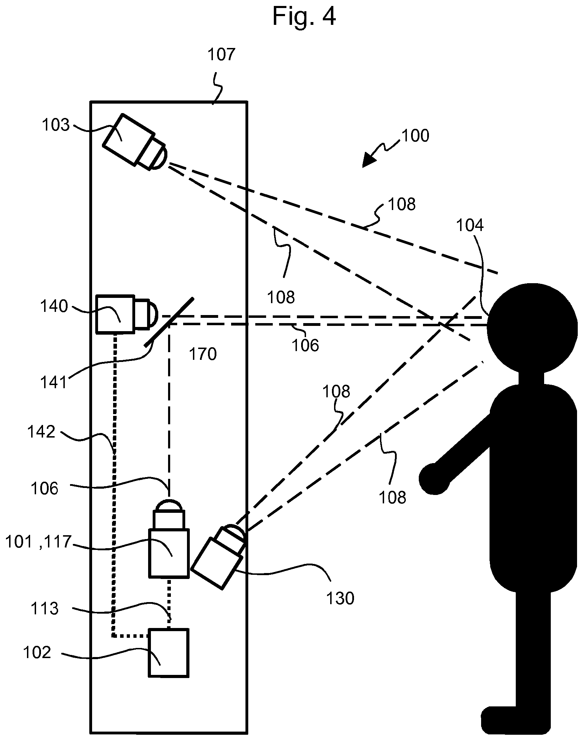

In Figur 4 ist eine alternative vierte Ausführungsform der erfindungsgemäßen Vorrichtung 100 gezeigt. Diese unterscheidet sich von der dritten Ausführungsform dadurch, dass die Kamera 101 als VIS-Kamera 117 ausgebildet ist zur Detektion des Gesichts 104 im sichtbaren Wellenlängenbereich, und dass zusätzlich eine NIR-Kamera 140 zur Detektion der strukturierten Beleuchtung 108 im NIR-Wellenlängenbereich vorgesehen ist. Die VIS-Kamera 117 und die NIR-Kamera 140 sind dabei beide auf einen Strahlteiler 141 gerichtet, wobei der Strahlteiler 141 Licht im NIR-Wellenlängenbereich transmittiert und Licht im sichtbaren Wellenlängenbereich reflektiert. Die NIR-Kamera 140 steht ebenfalls in einer Kommunikationsverbindung 142 mit der Auswerteeinheit 102. Die VIS-Kamera 117 kann dabei auch die weiteren Abbildungen, die zur Substitution der Falschpixel und/oder der Gestellpixel notwendig sind, aufnehmen. Alternativ kann die Vorrichtung 100 aber noch eine zusätzliche, nicht gezeigte, weitere Kamera 120 aufweisen, die unter unterschiedlichen Neigungswinkeln die weiteren und zusätzlichen Abbildungen im sichtbaren Wellenlängenbereich aufnimmt.

Das von der Vorrichtung nach Figur 4 durchgeführte Verfahren unterscheidet sich von demjenigen der dritten Ausführungsform dahingehend, dass die erste Abbildung durch die VIS-Kamera 117 und die zweite Abbildung durch die NIR-Kamera 140 aufgenommen wird.

### BEZUGSZEICHENLISTE

- 100: Vorrichtung
- 101: Kamera
- 102: Auswerteeinheit
- 103: Projektionsmittel
- 104: Gesicht
- 105: Spiegel
- 106: Strahlengang
- 107: Gehäuse
- 108: Strukturierte Beleuchtung
- 109: Sperrfilter
- 110: Erstes Sperrfilter
- 111: Zweites Sperrfilter
- 112: NIR-VIS-Kamera
- 113: Kommunikationsverbindung (Kamera)
- 114: Brillenglas
- 115: Streifenmuster
- 115a: Linie
- 115b: Linie
- 115c: Linie
- 115d: Linie
- 116: VIS-Kamera
- 120: weitere Kamera
- 121: Kommunikationsverbindung (weitere Kamera)
- 130: Zweites Projektionsmittel
- 131: Gittermuster
- 140: NIR-Kamera
- 141: Strahlteiler
- 142: Kommunikationsverbindung (NIR-Kamera)

## Patentansprüche

1. Verfahren zur Erzeugung eines brillenlosen Gesichtsbildes einer bebrillten Person, dieses die folgenden Schritte umfassend:
A) Aufnahme einer ersten Abbildung eines Gesichts (104) der Person mittels einer Kamera (101);
B) Ermittlung von den den Brillengläsern (114) zugeordneten Pixeln in der ersten Abbildung mittels einer Auswerteeinheit (102);
C) Beleuchten des Gesichts (104) der Person und dadurch Erzeugen eines Musters auf dem Gesicht (104) und auf den Brillengläsern (114) mittels eines Projektionsmittels (130), wobei durch das mindestens eine Projektionsmittel (130) ein Muster in Form eines Streifenmusters (115) auf das Gesicht (104) der Person und auf die Brillengläser (114) projiziert wird;
D) Aufnahme einer zweiten Abbildung des beleuchteten Gesichts (104) der Person mittels der Kamera (101) oder mittels einer zweiten Kamera; und
E) Ermittlung und Ausgleich von durch die Brillengläser (114) hervorgerufenen optischen Effekten innerhalb der ersten Abbildung anhand einer in der zweiten Abbildung detektierten Musterverzeichnung mittels der Auswerteeinheit, um das brillenlose Gesichtsbild der Person zu erzeugen, wobei die Musterverzeichnung detektiert wird durch die Ermittlung von Unstetigkeitsstellen und/oder Knickstellen des Musters in der zweiten Abbildung mittels der Auswerteeinheit (102).

2. Verfahren nach Anspruch 1, **gekennzeichnet durch** den folgenden Schritt:
- Ermittlung von Gestellpixeln in der ersten Abbildung, die einem Brillengestell der Brille zugeordnet sind mittels der Auswerteeinheit (102), und Substituieren der Gestellpixel zur Erzeugung eines brillenlosen Gesichtsbildes.

3. Verfahren nach Anspruch 1 oder 2, **gekennzeichnet durch** die folgenden Schritte:
- Überprüfen des Gesichtsbilds auf fehlende Bildinformationen;
- Ermittlung der den fehlenden Bildinformationen entsprechenden Falschpixeln; und
- Substitutieren der Falschpixel zur Erzeugung eines brillenglaslosen Gesichtsbilds.

4. Verfahren nach Anspruch 2 oder 3, **gekennzeichnet durch** die folgenden Schritte:
- Aufnehmen einer weiteren Abbildung des Gesichts der Person unter einem von der ersten Abbildung abweichenden Winkel;
- Ermittlung von den den Gestellpixeln und/oder den Falschpixeln entsprechenden Ersatzpixeln innerhalb der weiteren Abbildung, und
- Substitutieren der Gestellpixel und/oder der Falschpixel durch die Ersatzpixel.

5. Vorrichtung (100) zur Erzeugung eines brillenlosen Gesichtsbildes einer bebrillten Person nach dem Verfahren gemäß einem der vorangehenden Ansprüche, mit einer Kamera (101) zur Erfassung eines Gesichts (104) der Person, mit einem Projektionsmittel (103) zur strukturierten Beleuchtung des Gesichts (104) der Person, wobei das Projektionsmittel (103) ausgestaltet ist, ein Muster in Form eines Streifenmusters (115) auf das Gesicht (104) der bebrillten Person und auf die Brillengläser (114) zu projizieren, sowie mit einer mit der Kamera (101) verbundenen Auswerteeinheit (102), die ausgebildet ist, in Schritt E) anhand des mit dem Projektionsmittel (103) strukturiert beleuchteten Gesichts (104) die durch Brillengläser (114) hervorgerufenen optischen Effekte mittels eines Verfahrens zur Erfassung dreidimensionaler Objekte anhand der in Schritt E) detektierten Musterzeichnung auszugleichen und die Brille aus einer Abbildung mittels einer Bildbearbeitung zu entfernen.

6. Vorrichtung (100) nach Anspruch 5, **dadurch gekennzeichnet, dass** das Projektionsmittel (103) Licht im nicht-sichtbaren Wellenlängenbereich emittiert.

7. Vorrichtung (100) nach Anspruch 5 oder 6, **dadurch gekennzeichnet, dass** eine NIR-Kamera zur Detektion der durch das Projektionsmittel (103) erzeugten Beleuchtung vorgesehen ist.

8. Vorrichtung (100) nach einem der Ansprüche 5 bis 7, **dadurch gekennzeichnet, dass** die Kamera (101) als eine NIR-VIS-Kamera (112) gebildet ist, dass der NIR-VIS-Kamera (112) zwei wechselbare Sperrfilter (109) zugeordnet sind, die in oder aus einem Strahlengang (106) zwischen dem Gesicht (104) und der NIR-VIS-Kamera (112) verstellbar sind, und dass das erste Sperrfilter (110) einen Durchlassbereich für Wellenlängen des Lichts im NIR aufweist und das zweite Sperrfilter (111) einen Durchlassbereich für Wellenlängen des sichtbaren Lichts aufweist.

9. Vorrichtung (100) nach einem der Ansprüche 5 bis 8, **dadurch gekennzeichnet, dass** mindestens eine weitere Kamera (120) zur Aufnahme mindestens eines weiteren Gesichtsbildes vorgesehen ist.

10. Vorrichtung (100) nach einem der Ansprüche 5 bis 9, **dadurch gekennzeichnet, dass** durch das Projektionsmittel (103) das Gesicht (104) der Person unter einem Neigungswinkel bezüglich der Horizontalen beleuchtbar ist.

11. Vorrichtung (100) nach Anspruch 10, **dadurch gekennzeichnet, dass** ein zweites Projektionsmittel (130) vorgesehen ist zur Erzeugung eines Gittermusters (131) auf dem Gesicht (104) der Person.

## Claims

1. A method of generating a spectacle-free facial image of a spectacled person, comprising the following steps:
A) Recording a first image of a face (104) of the person by means of a camera (101);
B) Determination of the pixels assigned to the spectacle lenses (114) in the first image by means of an evaluation unit (102);
C) Illuminating the face (104) of the person and thereby creating a pattern on the face (104) and on the spectacle lenses (114) by means of a projection means (130), wherein a pattern in the form of a stripe pattern (115) is projected onto the face (104) of the person and onto the spectacle lenses (114) by the at least one projection means (130);
D) Capturing a second image of the illuminated face (104) of the person by means of the camera (101) or by means of a second camera; and
E) Determination and compensation of optical effects within the first image caused by the spectacle lenses (114) on the basis of a pattern distortion detected in the second image by means of the evaluation unit, in order to generate the spectacle-free facial image of the person, the pattern distortion being detected by determining discontinuity points and/or kink points of the pattern in the second image by means of the evaluation unit (102).

2. The method according to claim 1, **characterized by** the following step
- Determining frame pixels in the first image which are assigned to a spectacle frame of the spectacles by means of the evaluation unit (102), and substituting the frame pixels to generate a spectacle-free facial image.

3. The method according to claim 1 or 2, **characterized by** the following steps:
- Checking the facial image for missing image information;
- Determining the false pixels corresponding to the missing image information; and
- Substituting the false pixels to produce a lensless facial image.

4. The method according to claim 2 or 3, **characterized by** the following steps:
- Taking a further image of the person's face at an angle different from the first image;
- Determining the substitute pixels corresponding to the frame pixels and/or the false pixels within the further image, and
- Substituting the replacement pixels for the frame pixels and/or the false pixels.

5. A device (100) for generating a spectacle-free facial image of a spectacled person according to the method according to one of the preceding claims, having a camera (101) for detecting a face (104) of the person, having a projection means (103) for structured illumination of the face (104) of the person, the projection means (103) being designed to project a pattern in the form of a stripe pattern (115) onto the face (104) of the spectacled person and onto the spectacle lenses (114), and with an evaluation unit (102) which is connected to the camera (101) and which is designed, in step E), to compensate for the optical effects caused by spectacle lenses (114) by means of a method for detecting three-dimensional objects on the basis of the pattern drawing detected in step E) and to remove the spectacles from an image by means of image processing, using the face (104) illuminated in a structured manner by the projection means (103).

6. The device (100) according to claim 5, **characterized in that** the projection means (103) emits light in the non-visible wavelength range.

7. The device (100) according to claim 5 or 6, **characterized in that** a NIR camera is provided for detecting the illumination generated by the projection means (103).

8. The device (100) according to any one of claims 5 to 7, **characterized in that** the camera (101) is formed as an NIR-VIS camera (112), **in that** the NIR-VIS camera (112) is assigned to two exchangeable blocking filters (109), which are adjustable in or out of a beam path (106) between the face (104) and the NIR-VIS camera (112), and **in that** the first blocking filter (110) has a transmission range for wavelengths of light in the NIR and the second blocking filter (111) has a transmission range for wavelengths of visible light.

9. The device (100) according to any one of claims 5 to 8, **characterized in that** at least one further camera (120) is provided for recording at least one further facial image.

10. The device (100) according to any one of claims 5 to 9, **characterized in that** the person's face (104) can be illuminated by the projection means (103) at an angle of inclination with respect to the horizontal.

11. The device (100) according to claim 10, **characterized in that** a second projection means (130) is provided for generating a grid pattern (131) on the face (104) of the person.

## Revendications

1. Procédé de génération d'une image de visage sans lunettes d'une personne portant des lunettes, comprenant les étapes suivantes :
A) enregistrement d'une première représentation d'un visage (104) de la personne au moyen d'une caméra (101) ;
B) détermination des pixels associés aux verres de lunettes (114) dans la première représentation au moyen d'une unité d'évaluation (102) ;
C) éclairage du visage (104) de la personne et ainsi génération d'un modèle sur le visage (104) et sur les verres de lunettes (114) au moyen d'un moyen de projection (130), dans lequel un modèle sous forme d'un modèle en bandes (115) est projeté sur le visage (104) de la personne et sur les verres de lunettes (114) par l'intermédiaire du au moins un moyen de projection (130) ;
D) enregistrement d'une seconde représentation du visage éclairé (104) de la personne au moyen de la caméra (101) ou au moyen d'une seconde caméra ; et
E) détermination et équilibrage d'effets optiques provoqués par les verres de lunettes (114) à l'intérieur de la première représentation à l'aide d'une distorsion de modèle détectée dans la seconde représentation au moyen de l'unité d'évaluation, pour générer l'image de visage sans lunettes de la personne, dans lequel la distorsion de modèle est détectée par la détermination de points de discontinuité et/ou de points de pliage du modèle dans la seconde représentation au moyen de l'unité d'évaluation (102).

2. Procédé selon la revendication 1, **caractérisé par** l'étape suivante :
- détermination de pixels de monture dans la première représentation, qui sont associés à une monture de lunettes des lunettes au moyen de l'unité d'évaluation (102), et substitution des pixels de monture pour générer une image de visage sans lunettes.

3. Procédé selon la revendication 1 ou 2, **caractérisé par** les étapes suivantes :
- vérification d'informations d'image manquantes sur l'image de visage ;
- détermination des faux pixels correspondant aux informations d'image manquantes ; et
- substitution des faux pixels pour générer une image de visage sans lunettes.

4. Procédé selon la revendication 2 ou 3, **caractérisé par** les étapes suivantes :
- enregistrement d'une représentation supplémentaire du visage de la personne sous un angle différent de la première représentation ;
- détermination des pixels de remplacement correspondant aux pixels de monture et/ou aux faux pixels à l'intérieur de la représentation supplémentaire, et
- substitution des pixels de monture et/ou des faux pixels par les pixels de remplacement.

5. Dispositif (100) pour la génération d'une image de visage sans lunettes d'une personne portant des lunettes selon le procédé selon l'une quelconque des revendications précédentes, avec une caméra (101) pour saisir un visage (104) de la personne, avec un moyen de projection (103) pour l'éclairage structuré du visage (104) de la personne, dans lequel le moyen de projection (103) est conçu pour projeter un modèle sous forme d'un modèle en bandes (115) sur le visage (104) de la personne portant des lunettes et sur les verres de lunettes (114), ainsi qu'avec une unité d'évaluation (102) connectée à la caméra (101), unité d'évaluation qui est conçue pour équilibrer, à l'étape E), à l'aide du visage (104) éclairé de manière structurée par le moyen de projection (103), les effets optiques provoqués par les verres de lunettes (114) au moyen d'un procédé pour détecter des objets tridimensionnels à l'aide du dessin de modèle détecté à l'étape E) et supprimer les lunettes d'une représentation au moyen d'un traitement d'image.

6. Dispositif (100) selon la revendication 5, **caractérisé en ce que** le moyen de projection (103) émet de la lumière dans la gamme de longueurs d'onde non visible.

7. Dispositif (100) selon la revendication 5 ou 6, **caractérisé en ce qu'**une caméra NIR est prévue pour détecter l'éclairage généré par le moyen de projection (103).

8. Dispositif (100) selon l'une quelconque des revendications 5 à 7, **caractérisé en ce que** la caméra (101) est formée comme une caméra VIS NIR (112), **en ce que** deux filtres de blocage interchangeables (109) sont associés à la caméra VIS NIR (112), filtres qui peuvent être déplacés dans ou hors d'un trajet de faisceau (106) entre le visage (104) et la caméra VIS NIR (112), et **en ce que** le premier filtre de blocage (110) présente une zone de passage pour des longueurs d'onde de la lumière dans la NIR et le second filtre de blocage (111) présente une zone de passage pour des longueurs d'onde de la lumière visible.

9. Dispositif (100) selon l'une quelconque des revendications 5 à 8, **caractérisé en ce qu'**au moins une caméra supplémentaire (120) est prévue pour enregistrer au moins une image de visage supplémentaire.

10. Dispositif (100) selon l'une quelconque des revendications 5 à 9, **caractérisé en ce que** le visage (104) de la personne peut être éclairé par l'intermédiaire du moyen de projection (103) à un angle d'inclinaison par rapport à l'horizontale.

11. Dispositif (100) selon la revendication 10, **caractérisé en ce qu'**un second moyen de projection (130) est prévu pour générer un modèle de grille (131) sur le visage (104) de la personne.
